Europäisches Patentamt

**European Patent Office**

Office européen des brevets

(19)

(11) Numéro de publication: **0 134 736**
**A1**

(12) # DEMANDE DE BREVET EUROPEEN

(21) Numéro de dépôt: **84401512.3**

(22) Date de dépôt: **18.07.84**

(51) Int. Cl.⁴: **F 02 B 3/02**
**F 23 Q 7/00, H 01 T 13/46**

(30) Priorité: **26.07.83 FR 8312319**
**04.07.84 FR 8410621**

(43) Date de publication de la demande:
**20.03.85 Bulletin 85/12**

(84) Etats contractants désignés:
**AT BE CH DE FR GB IT LI LU NL SE**

(71) Demandeur: **Lamy, Jacques Edouard**
**16 rue d'Estienne d'Orves**
**F-92260 Fontenay aux Roses(FR)**

(72) Inventeur: **Lamy, Jacques Edouard**
**16 rue d'Estienne d'Orves**
**F-92260 Fontenay aux Roses(FR)**

(74) Mandataire: **De Boisse, Louis et al,**
**37, Avenue Franklin D. Roosevelt**
**F-75008 Paris(FR)**

(54) **Moteurs à pistons à combustion interne particulièrement destinés aux véhicules automobiles.**

(57) Moteur à combustion interne avec injection du combustible liquide dans les cylindres vers la fin du temps de compression de l'air.

Son taux de compression volumétrique est compris entre environ 13 et 17 ; le combustible liquide comprend des portions légères volatiles et des portions ou fractions lourdes ; l'allumage du mélange d'air et de combustible est provoqué par étincelle électrique. Le combustible peut être un mélange d'essence pour moteurs à explosion et de gazole pour moteurs Diesel.

Application à l'industrie automobile.

FIG.:1

EP 0 134 736 A1

0134736

- 1 -

<u>Moteurs à pistons à combustion interne particulièrement destinés aux véhicules automobiles.</u>

La technique actuelle des moteurs à pistons est scindée en deux groupes de machines suivant leur cycle thermodynamique et surtout leur mode d'allumage et de combustion du combustible.

Dans le groupe des moteurs dits à "explosion" ou à "allumage commandé", qu'ils soient du type à carburateur ou à injection, le mélange air/c$_a$rburant préexiste au début de la combustion et celle-ci est déclenchée le plus généralement par une étincelle éclatant entre les deux électrodes d'une "bougie" à un moment du cycle du moteur qui est bien déterminé et d'ailleurs variable (avance à l'allumage).

On admet dans la terminologie courante que ce moteur à mélange préalable et à allumage électrique est un moteur à explosion ou combustion à volume presque constant. Quand ce moteur est à injection, il s'agit d'une injection du carburant pendant la phase d'aspiration de l'air dans le cylindre. Cette injection est faite dans la pipe d'admission d'air de chaque cylindre, ou plus rarement dans le cylindre pendant la phase d'admission (surtout pour les moteurs d'avions).

Dans les moteurs du deuxième groupe qui portent le nom de leur inventeur Rudolf Diesel, le combustible utilisé constitué par une huile lourde dénommée gas-oil ou gazole, est trop peu volatil pour que l'on puisse faire un mélange préalable d'air et de vapeur carburé.

Le combustible est injecté en fin de compression de l'air dans le cylindre et comme cet air est très chaud, du fait du taux élevé de compression, il enflamme le combustible et celui-ci brûle à mesure de son introduction dans le cylindre. Si le phénomène était parfaitement réglé, on aurait une combustion se continuant à mesure que le piston recule dans la phase motrice (détente) et la pression durant la combustion demeurerait constante. Ce modèle est très théorique car la situation du piston, vers le point mort étant proche du maximum de la course, le recul du piston est assez lent dans la première partie du temps moteur. Le déroulement de la combustion qui démarre souvent avec un certain retard (il faut alors une "avance à l'injection"), fait que, dans la pratique, il y a une augmentation de pression due à la combustion. Les cycles réels ont alors un aspect mixte dont le schéma théorique serait : volume constant d'abord puis pression constante.

Pour que l'air comprimé puisse enflammer le jet de combustible, il faut que la température de l'air, donc le taux de compression volumétrique, soit assez élevé.

Dans les Diesels rapides pour automobiles le taux de compression est de l'ordre de 22 à 24.

Cependant sans faire de calculs complexes et par analogie avec les cycles à combustion à pression constante des turbines à gaz, on peut montrer que les valeurs du taux de

0134736

compression qui sont les meilleures pour le rendement sont
de l'ordre de 14 à 16.

Mais la difficulté du démarrage à froid, quoique aidé en
pratique par des bougies chauffantes, fait renoncer à ces
taux de compression volumétrique optimaux et conduit à préférer des taux plus élevés permettant d'augmenter la température de l'air par compression.

Quand aux moteurs à allumage commandé (ou "à explosion") on
sait que le taux de compression volumétrique est limité par
un phénomène parasite de détonation appelé aussi "cliquetis".
Ce phénomène a un caractère destructeur par voie thermique
et mécanique localisée.

Sur ce genre de moteurs, le taux volumétrique de compression ne peut guère dépasser actuellement 9,5.

De très nombreux paramètres influent sur le cliquetis :
l'avance à l'allumage, la richesse du mélange air/carburant,
la température, la pression du mélange carburé au moment de
son admission dans les cylindres, et finalement la composition du carburant. Ces paramètres sont ceux qui influent
sur la composition physique et chimique du mélange carburé
au moment de son allumage.

L'importance de la composition chimique du carburant est
telle que les raffineries de pétrole préparent des mélanges
d'hydrocarbures en pratiquant sur les pétroles bruts des
opérations spéciales qui changent la composition chimique
des tranches de mélanges naturels.

A ces mélanges élaborés d'hydrocarbures, on adjoint finalement un catalyseur antidétonnant : le plomb, incorporé sous
la forme liquide miscible : le plomb tétraéthyle.

La qualité indétonante du carburant pour moteur à explosion est repérée par un indice qui revêt plusieurs variantes :
les divers indices d'octane du carburant.

Le fait que la suralimentation des moteurs d'automobile
tend à se généraliser ne change rien à la généralité des
observations précédentes.

Du reste les moteurs alternatifs (ou à pistons) d'avion sont
généralement suralimentés et c'est leur emploi en très
grand nombre pendant la guerre 39-45, et la recherche de
hautes puissances massiques qui a lancé l'industrie du raffinage dans la "course à l'octane".

L'objet de la présente invention est une combinaison d'un
carburant liquide de composition particulière et d'un moteur
à combustion interne dont le taux volumétrique de compression, la distribution et l'allumage sont adaptés à ce carburant pour obtenir un certain nombre de résultats et avantages.

Le carburant se caractérise en ce qu'il comporte des portions ou fractions volatiles et des portions ou fractions
peu volatiles.

Est volatil, au sens de la présente description et des revendications qui la suivent, le carburant habituel des moteurs à explosion et à allumage électrique commandé, dénommé généralement "essence", qui se vaporise facilement à la
température ambiante et est donc apte à former avec l'air,
par évaporation naturelle, un mélange inflammable par étincelle électrique. Sont généralement volatils l'alcool éthylique ou méthylique, le benzène et d'autres composés déjà
utilisés ou proposés pour carburer de l'air par évaporation.

Doivent être considérées au contraire comme peu volatiles
au sens de la présente description les huiles que l'on obtient en queue de distillation du pétrole et que l'on utilise sous le nom de gas-oil (ou gazole) pour l'alimentation des moteurs du genre Diesel fonctionnant avec un taux de compression volumétrique élevé d'au moins 22 et à auto-allumage du combustible injecté comme on l'a rappelé ci-dessus. Des huiles peu volatiles peuvent être aussi d'une autre origine minérale ou d'origine végétale comme par exemple l'huile de colza.

Le carburant mixte contenant des fractions ou portions volatiles et des fractions ou portions peu volatiles peut être celui obtenu par distillation directe du pétrole comme décrit dans le brevet français du demandeur n° 77 20923, de sorte qu'il comprend une partie légère provenant de la tête de distillation, analogue à l'essence ordinaire et une partie provenant de la queue de distillation, analogue au gazole.

Le carburant mixte peut aussi résulter d'un mélange de gas-oil et d'essence d'automobile, essence ordinaire dopée ou non au plomb ou super-carburant, mélange que l'utilisateur d'un véhicule automobile réalisera lui-même très facilement aux pompes d'une station, lors du remplissage du réservoir. Ce mélange peut être fait par parties en volume à peu près égales.

Le moteur adapté pour fonctionner avec ce carburant mixte a ses cylindres alimentés en air non carburé, comprimé ou non préalablement, et comporte un dispositif d'injection du combustible dans les cylindres vers la fin du temps de compression. Il se caractérise en ce que son taux de compression volumétrique est de l'ordre de 13 à 17 et en ce que l'allumage du mélange d'air et de combustible injecté est provoqué par étincelles ou effluves électriques chaudes. On n'exclut pas la possibilité d'un allumage avec les dispositifs existants des diesels, dans des climats favorables, ce qui aiderait au lancement de la technique proposée, dans une première phase technologique.

On va considérer ces diverses particularités du moteur.

Le carburant sera injecté dans l'espace libre de la chambre de combustion, avec une avance sur le point mort haut de compression. Cette avance sera réglée convenablement par la mise au point courante.

Cette injection sera donc faite dans un air déjà comprimé par le temps de compression ou par le compresseur de suralimentation suivi de la compression dans le cylindre.

Cette injection sera obtenue par un système de pompes et distributeurs classiques dans les moteurs diesel de même catégorie. De préférence l'injection sera directe dans les cylindres du moteur, mais on pourra faire l'injection dans une préchambre, notamment dans des cas dimensionnels rendant difficile l'injection directe.

Le liquide injecté, en cours de vaporisation sur les trajectoires des gouttelettes pourra, en partie, subir une déflection par un bossage ou un creux approprié, ménagé sur le piston, ou sur la culasse ou une pièce rapportée sur la culasse . ou la bougie, de façon que la fraction défléchie soit ralentie et puisse être enflammée par les électrodes d'une bougie ou l'organe d'inflammation en usage, pour les moteurs à explosion ou les turboréacteurs d'avion.

On remarque que le taux de compression volumétrique, relativement élevé, est tel qu'il serait inapplicable dans les moteurs à explosion ordinaires, en raison du phénomène de détonation dont il a été parlé.

Ce taux de compression est néanmoins plus faible que celui des moteurs diesel et par conséquent plus favorable au rendement.

Pour l'allumage on pourra utiliser une bougie classique et un système d'allumage normal des moteurs à explosion.

L'émission d'étincelles pourra aussi être prolongée pour servir de pilote à la combustion.

Ainsi la première étincelle pourra être émise dès le début de l'injection de carburant et cette première étincelle pourra être suivie d'autres étincelles pendant tout le temps de l'injection et même de la combustion.

Un système d'allumage analogue à celui des turboréacteurs pourra apporter plus d'énergie. Il procure aussi la faculté d'enflammer un fluide en mouvement. Le système d'allumage sera simplifié si la précision de son réglage dans le temps n'est pas primordiale.

L'émission d'étincelles pourra commencer avant l'injection, notamment pour le démarrage à froid.

Elle pourra aussi être retardée par rapport à l'injection pour obtenir une croissance plus rapide de pression dans certains régimes de fonctionnement.

Dans le cas où le moteur sera chaud et l'air atmosphérique tempéré, l'allumage du carburant pourra être spontané dès l'injection dans l'espace mort du cylindre. Le fonctionnement sera alors du genre diesel, la bougie électrique ne servant à la limite qu'à régulariser le déclenchement de la combustion.

Ce fonctionnement sera le plus courant, après le démarrage à froid du moteur.

Dans les climats très froids, on rendra plus précis l'allumage électrique, si le combustible ne peut pas s'auto-allumer.

Par sa volatilisation rapide la partie légère du carburant injecté permettra l'inflammation par étincelle dans les fonctionnements à froid (démarrage ou climats froids).

La partie "lourde" du carburant, genre gazole, assurera la pénétration du jet d'injection dans l'atmosphère de la chambre de combustion, permettant ainsi l'atteinte de l'oxygène disponible dans le milieu ambiant, lui-même en régime de turbulence. Des creusements du piston ou des bossages combinés avec une forme générale du piston peuvent aider à rendre cette combustion complète.

Si la partie légère provient de coupes pétrolières, éthylées ou non (plombées ou non), ou du genre alcools, une valeur relativement élevée de ses indices d'octane ne sera pas à écarter à priori comme on pourrait l'imaginer à cause de la corrélation inverse entre les indices d'octane et de cétane. Le "délai physique" d'inflammation sera très réduit par la tendance à la vaporisation de la partie légère du carburant et pourra compenser un éventuel accroissement du "délai chimique" d'inflammation.

Par rapport aux moteurs à explosion actuels la nouvelle combinaison apporte les avantages suivants :

a. possibilité de fonctionner sans dégradations thermiques et mécaniques à un taux de compression global plus élevé que dans les moteurs classiques où il ne dépasse guère 9; donc d'obtenir un meilleur rendement thermique (ou consommation spécifique) et une puissance volumétrique (kW/litre) plus élevée.

b. Possibilité de brûler des mélanges pauvres, ce qui améliore encore la consommation dans la comparaison de cas réels de fonctionnement.

c. Fonctionner à tous les régimes sans introduire la perte de charge due au vannage de l'air (ou des gaz), le papillon des gaz habituel étant supprimé.

d. Diminuer la température d'échappement à cause d'un taux de détente plus élevé, ce qui facilite la tenue d'une turbine entraînée par les gaz d'échappement.

e. Utiliser un carburant moins noble dont l'indice d'octane est indifférent.

f. Supprimer, à long terme, la pollution par le plomb.

Par rapport aux moteurs diesel la nouvelle combinaison apporte les résultats suivants :

a. Possibilité de fonctionner à des taux de compression nettement inférieurs à ceux des moteurs actuels donc plus favorables au rendement.

b. Plus grande facilité d'adapter l'injection directe(sans utilisation de préchambres) – donc diminution des pertes calorifiques.

c. Réduction de la puissance demandée au démarreur.

De façon générale, l'invention permet d'utiliser un carburant qui coûtera moins cher à produire et même d'utiliser des produits non pétroliers développés par exemple à partir de sources agricoles nationales.

Ces produits ont souvent une meilleure miscibilité aux gazoles qu'à l'essence.

La présence d'une étincelle d'allumage et le taux de compression élevé seront des éléments favorables à leur combustion.

La présente invention s'étend également à des perfectionnements aux moteurs décrits ci-dessus, en vue d'améliorer l'allumage de la combustion.

On sait que, pour démarrer les moteurs Diesel d'automobiles, on munit les cylindres de bougies chauffées par des résistances électriques mises en circuit pendant un temps suffisant pour que le moteur démarre et mises ensuite hors circuit afin d'éviter une consommation excessive d'électricité.

Un moyen de ce genre peut être utilisé dans le moteur qui fait l'objet de la présente invention. Dans un tel moteur fonctionnant avec un taux de compression relativement faible, on peut mettre en circuit les résistances d'une façon permanente en les réalisant au moyen d'un corps tel que le nickel dont le coefficient d'augmentation de résistivité en fonction de la température est relativement élevé, de sorte qu'à chaud la résistance consommera notablement moins de courant qu'à froid.

La bougie sera conçue de manière que sa tête chaude soit isolée du système de refroidissement du moteur. Sa forme et sa position seront étudiées pour faciliter l'élévation de sa température moyenne, toutes conditions qui concourent à réduire la consommation de courant de chauffage.

Au moyen d'un carénage incorporé à la forme de la bougie ou rapporté, on pourra aussi protéger la tête chaude de la bougie, du refroidissement provoqué par le courant d'air d'admission.

La position de la bougie dans le cylindre sera choisie au voisinage de la zone d'échappement qui est plus chaude que la zone d'admission.

La position de l'injecteur de combustible liquide sera choisie de manière qu'il projette le combustible vers la bougie, ce qui pourra être favorisé par l'aménagement dans le cylindre d'un bossage déflecteur.

S'il s'agit d'un injecteur projetant directement le carburant à partir de la culasse par exemple, la bougie pourra prendre la forme d'un anneau entourant l'injecteur. Cet anneau pourra être constitué par exemple d'une matière réfractaire céramique rendue conductrice ou d'un alliage métallique classique d'usage courant dans les turbomachines ou bien encore d'un produit fritté au tungstène.

On peut aussi aménager la tête de la soupape d'échappement ou une zone du cylindre mitoyenne des orifices d'échappement, de manière à y former un point chaud, constitué par exemple par une protubérance telle qu'une perle ou une aiguille en métal réfractaire.

Une bougie conforme à ce qui a été dit ci-dessus peut être combinée avec une telle surface chaude, de manière à permettre de couper le courant de chauffage de la bougie après démarrage du moteur, quand la surface chaude a pris une température suffisante.

Le déclenchement de la combustion en particulier dans le cas des carburants à hauts indices de cétane est dû à une préoxydation de certaines des molécules du combustible par l'oxygène de l'air, préchauffé par la compression dans le cylindre.

Lorsqu'on injecte le combustible dans la chambre de combustion d'un moteur Diesel, un temps mort peut résulter d'une

12

insensibilité à cette préoxydation (choc).     0134736

Au contraire, dans les moteurs à explosion, l'air et le combustible ont un contact prolongé à des températures favorables à la préoxydation, d'où un risque de détonation.

Pour améliorer la combustion dans le moteur conforme au brevet principal, il est avantageux de fractionner l'injection de combustible de manière qu'une petite partie de la dose de carburant à introduire dans chaque cylindre soit injectée pendant le temps de compression. Le carburant ainsi préinjecté dans l'air en cours de compression sera oxydé et favorisera l'amorçage de la combustion du reste du carburant injecté vers la fin du temps de compression : plus précisément, à partir du moment où l'air comprimé atteint la plage de température 200°/300°C.

En même temps, il pourra s'ensuivre par une faible combustion partielle un certain préchauffage de l'air, ce qui sera utile notamment lors du démarrage par temps froid où l'on aura alors intérêt à augmenter la quantité de carburant préinjectée.

On n'aura aucune difficulté à réaliser les injecteurs comportant deux temps d'injection et fonctionnant par exemple par levées d'aiguilles sous des pressions différentes ou avec commande par came.

Au lieu de faire la préinjection dans les chambres de combustion du cylindre, on pourra la faire dans la pipe d'admission pendant que la soupape d'admission est ouverte.

La description qui va suivre en regard des dessins annexés donnés à titre d'exemple, permettra de bien comprendre comment l'invention peut être réalisée.

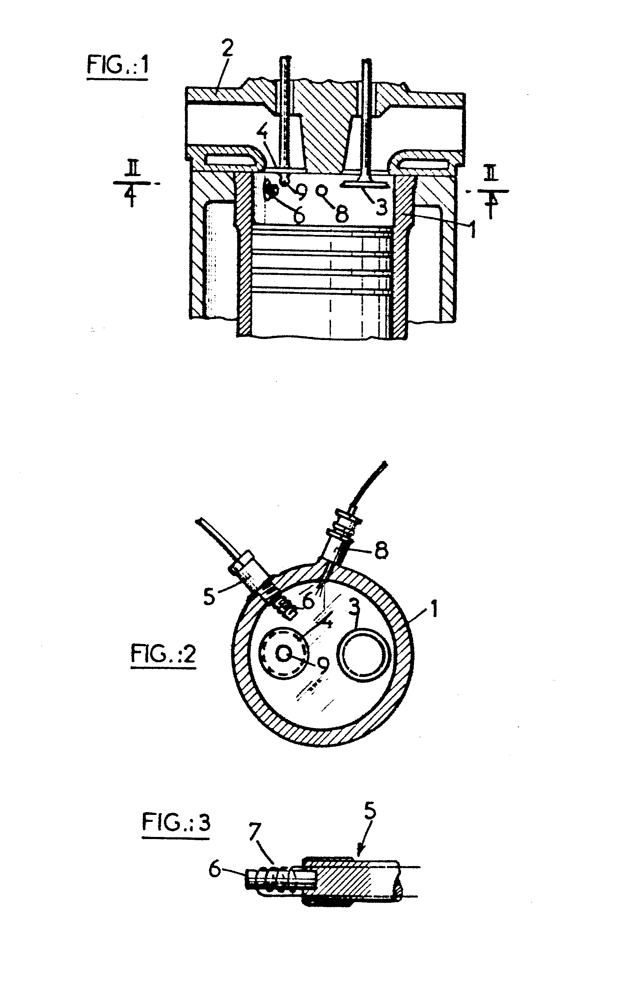

La figure 1 montre schématiquement en coupe axiale un cylindre de moteur.La figure 2 en est une coupe horizontale selon II-II sur laquelle on n'a pas représenté la chemise de refroidissement. La figure 3 représente en coupe partielle la tête chaude d'une bougie.

Sur les figures 1 et 2,on voit en 1 un cylindre de moteur avec sa culasse 2, sa soupape d'admission 3 et sa soupape d'échappement 4.

Au voisinage immédiat de la soupape d'échappement, c'est-à-dire dans la zone chaude de la chambre de combustion, se trouve une bougie 5. La tête 6 de cette bougie qui est apparente dans la chambre de combustion peut être constituée par un bâtonnet de tungstène ou de céramique réfractaire entouré par les spires 7 d'un fil de nickel. Celui-ci est relié à la batterie d'accumulateur par un circuit non figuré comportant un interrupteur qui permet de mettre en ou hors circuit la résistance de chauffage 7. Le bâtonnet 6 est fixé sur le corps métallique de la bougie par l'intermédiaire d'un isolant convenable, par exemple une céramique. La tête d'injection de carburant 8 débouche dans le cylindre au voisinage de la bougie et est orientée pour diriger le jet de combustible vers la tête de celle-ci.

On a représenté également sur le dessin, une protubérance 9 aménagée sur la tête de la soupape d'échappement 4. Cette protubérance peut être en métal réfractaire et en forme de perle de manière à être reliée à la tête de la soupape par un collet étroit limitant l'écoulement du flux de chaleur vers la masse de la soupape. Elle sert de point chaud au bout d'un certain temps de fonctionnement du moteur, en permettant la mise hors circuit de la résistance 7.

Il va de soi que les modes de réalisation ne sont que des exemples et l'on pourrait les modifier notamment par substitution d'équivalents techniques sans sortir pour cela du cadre de l'invention. En particulier, le terme de "bougie" employé plus haut ne doit pas être interprété de façon restrictive comme désignant un organe accessoire matériel à localisation ponctuelle, mais peut englober tout moyen propre à engendrer une zone chaude et non nécessairement à localisation ponctuelle : par exemple, quelque chose de linéaire. Il en sera notamment ainsi dans le cas d'un injecteur à symétrie circulaire, la "bougie" étant un anneau entourant l'injecteur.

REVENDICATIONS DE BREVET

1. Moteur à combustion interne avec injection du combustible liquide dans les cylindres vers la fin du temps de compression de l'air, caractérisé en ce que son taux de compression volumétrique est compris entre environ 13 et 17 et en ce que le combustible liquide comprend des portions légères volatiles et des portions ou fractions lourdes.

2. Moteur selon la revendication 1 , caractérisé en ce que l'allumage du mélange d'air et de combustible est provoqué par voie électrique.

3. Moteur selon la revendication 1, caractérisé en ce que le combustible est un mélange d'essence pour moteurs à explosion et de gazole pour moteurs Diesel.

4. Moteur selon la revendication 1 ou 2, caractérisé en ce que l'allumage du mélange d'air et de combustible est provoqué par étincelle électrique.

5. Moteur selon la revendication 1 ou 2, caractérisé en ce que l'allumage est provoqué par une série d'étincelles électriques.

6. Moteur selon la revendication 1 ou 2, caractérisé en ce que l'allumage est provoqué par une effluve électrique chaude.

7. Moteur selon la revendication 1 ou 2, utilisé dans des climats favorables, caractérisé en ce que l'allumage est fait par les dispositifs habituels des moteurs Diesel classiques ou polycarburants.

8. Moteur selon la revendication 1, caractérisé en ce que,

- 2 -

0134736

pour l'allumage du mélange d'air et de combustible, les cylindres (1) sont munis d'une bougie (5) à tête chaude (6) associée à une résistance électrique (7) permettant de chauffer la tête (6) de la bougie (5) lors du démarrage du moteur.

9. Moteur selon la revendication 8, caractérisé en ce que la résistance (7) est constituée par un corps tel que le nickel dont la résistivité croît quand la température s'élève.

10. Moteur selon la revendication 8 ou 9, caractérisé en ce que la bougie (5) est placée au voisinage de la soupape (4) ou des lumières d'échappement.

11. Moteur selon la revendication 8, 9 ou 10, caractérisé en ce que l'injecteur de combustible (8) est orienté pour projeter le combustible vers la bougie (6).

12. Moteur selon la revendication 8, 9 ou 10, caractérisé en ce que la résistance chauffante (7) entoure un injecteur à projection sous forme de nappe continue ou sous forme de jets distincts à répartition circulaire.

13. Moteur selon l'une quelconque des revendications 8 à 12, caractérisé par l'aménagement d'un point chaud (9) au voisinage de l'orifice d'échappement (4).

14. Moteur selon la revendication 13, caractérisé en ce que le point chaud est formé par une protubérance (9) en métal réfractaire en forme de perle ou d'aiguille.

15. Moteur selon l'une quelconque des revendications précédentes, caractérisé en ce qu'une fraction du combustible est injectée au début du temps de compression, le reste du combustible étant injecté vers la fin du temps de compression.

0134736

FIG.:1

FIG.:2

FIG.:3

**0134736**

Office européen
des brevets

**RAPPORT DE RECHERCHE EUROPEENNE**

Numéro de la demande

EP  84 40 1512

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. ³) |
|---|---|---|---|
| X | FR-A-2 346 556  (LE MOTEUR MODERNE)<br>* page 12, lignes 1-36 * | 1-4,7 | F 02 B    3/02<br>F 23 Q    7/00<br>H 01 T   13/46 |
| A | US-A-2 741 230  (TEXACO)<br>* colonne 4, lignes 44-73 * | 3,10, 11 | |
| A | US-A-2 484 009  (TEXACO)<br>* colonne 12, ligne 23 - colonne 14, ligne 71 * | 1-3,10 ,11 | |
| A | FR-A-2 502 409  (BALDINU)<br>* page 2, ligne 29 - page 3, ligne 6 * | 5 | |
| A | FR-A-2 415 266  (BERU)<br>* figures 1,2; page 3, lignes 1-40 * | 8,9 | **DOMAINES TECHNIQUES RECHERCHES (Int. Cl. ³)**<br><br>F 02 B<br>F 23 Q<br>H 01 T |
| A | FR-A-2 159 085  (BOSCH)<br>* figure; page 3, lignes 4-25 * | 8,12 | |
| A | US-A-3 749 980  (GENERAL ELECTRIC)<br>* colonne 2, ligne 39 - colonne 3, ligne 53 * | 14 | |

Le présent rapport de recherche a été établi pour toutes les revendications

| Lieu de la recherche<br>LA HAYE | Date d'achèvement de la recherche<br>15-10-1984 | Examinateur<br>WASSENAAR G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82